# FASCICULE DE BREVET EUROPEEN

(11) **EP 1 745 728 B1**
(45) Date de publication et mention de la délivrance du brevet: **03.06.2009**
(21) Numéro de dépôt: 06356078.3
(22) Date de dépôt: 27.06.2006
(51) Int. Cl.: A47J 43/07

(54) **Accessoire de préparation culinaire à outil rotatif muni d'un dispositif de sécurité particulier**
Küchengerät mit rotierendem Werkzeug und spezieller Sicherheitsvorrichtung
Kitchen device with a rotary tool equipped with a special security mechanism

(30) Priorité: 21.07.2005 FR 0507761
(43) Date de publication de la demande: 24.01.2007
(73) Titulaire: SEB SA, 69130 Ecully (FR)
(72) Inventeur: Hamelin, Franck, 50490 Saint Sauveur Lendelin (FR)
(74) Mandataire: Kiehl, Hubert

(56) Documents cités:
- FR-A- 2 822 364

## Description

La présente invention se rapporte au domaine technique général des appareils électroménagers de préparation culinaire. La présente invention concerne plus particulièrement les accessoires de préparation culinaire, comportant un outil rotatif agencé dans un récipient de travail, prévu pour être utilisé avec un boîtier moteur rapporté. La présente invention concerne également les appareils électroménagers de préparation culinaire comportant un accessoire du type précité.

Il est connu, de la demande de brevet FR 05 02059 déposée par la demanderesse, un accessoire de préparation culinaire pouvant être utilisé avec un boîtier moteur de pied mixeur. Cet accessoire est constitué par un récipient fermé par un couvercle intégrant un mécanisme de transmission comprenant un arbre d'entraînement pouvant s'accoupler avec l'entraîneur du boîtier moteur et un organe d'entraînement destiné à s'accoupler avec un outil rotatif disposé dans le fond du récipient de travail. Afin d'interdire l'accouplement du boîtier moteur au couvercle en l'absence de récipient de travail, il est prévu sur le couvercle un organe de détection agissant sur une tige de protection faisant saillie à proximité de l'arbre d'entraînement pour empêcher l'accouplement du boîtier moteur sur le couvercle lorsque le couvercle n'est pas en place sur le récipient. Une telle tige de protection présente cependant l'inconvénient d'être relativement encombrante et d'augmenter le nombre de pièces dans le couvercle. De plus, l'utilisateur peut être tenté de forcer sur la tige de protection pour la faire rentrer à l'intérieur du couvercle. Il y a donc un risque de casse de la tige de protection.

Un accessoire de préparation culinaire muni d'un dispositif de sécurité est aussi connu du brevet FR 2822364.

Aussi, un but de la présente invention est d'améliorer le dispositif de sécurité d'un accessoire de préparation culinaire du type précité.

A cet effet, l'invention se rapporte à un accessoire de préparation culinaire prévu pour être utilisé avec un boîtier moteur, l'accessoire comportant un récipient de travail fermé par un couvercle supportant une zone de réception du boîtier moteur et un mécanisme de transmission comprenant d'une part un arbre d'entraînement destiné à s'accoupler avec un entraîneur du boîtier moteur et d'autre part un entraîneur destiné à s'accoupler avec un outil rotatif disposé dans le récipient de travail, le couvercle supportant également un organe de détection mobile entre une position active, occupée lorsque le couvercle avec son mécanisme de transmission est en place sur le récipient de travail, et une position de repos, occupée en l'absence du récipient de travail, caractérisé en ce que le déplacement de l'organe de détection entre la position active et la position de repos provoque respectivement le déplacement d'une pièce mobile du mécanisme de transmission entre une position de fonctionnement et une position de sécurité, dans lesquelles respectivement, le mécanisme de transmission assure ou non l'entraînement de l'outil rotatif lorsque le boîtier moteur est engagé dans la zone de réception.

Selon une autre caractéristique de l'invention, la pièce mobile du mécanisme de transmission est constituée par l'arbre d'entraînement, ce dernier étant mobile entre une position de sécurité dans laquelle l'arbre d'entraînement est escamoté, de sorte qu'il ne peut s'accoupler à l'entraîneur lorsque le boîtier moteur est engagé dans la zone de réception, et une position de fonctionnement dans laquelle l'arbre d'entraînement peut être accouplé à l'entraîneur.

Selon une autre caractéristique de l'invention, la zone de réception du boîtier moteur, le mécanisme de transmission et l'organe de détection sont portés par un module de transmission amovible du couvercle.

Une telle caractéristique permet de laver le couvercle indépendamment du module intégrant le mécanisme de transmission. Ceci permet d'éviter les risques d'infiltration d'eau dans le mécanisme de transmission lors du lavage du couvercle.

Selon encore une autre caractéristique de l'invention, l'organe de détection assure également le verrouillage du couvercle sur le récipient, le déverrouillage du couvercle provoquant le retour en position de repos de l'organe de détection.

Une telle caractéristique permet de garantir le bon retour en position de repos de l'organe de détection lorsque le couvercle est retiré du récipient.

Selon encore une autre caractéristique de l'invention, l'arbre d'entraînement est mobile en translation entre la position de sécurité et la position de fonctionnement.

Selon encore une autre caractéristique de l'invention, l'organe de détection est mobile en rotation.

Selon encore une autre caractéristique de l'invention, l'organe de détection comporte une extrémité présentant la forme d'une fourchette coopérant avec un ergot présent sur le récipient.

Selon encore une autre caractéristique de l'invention, l'organe de détection est ramené en position de repos par un ressort de rappel.

Selon encore une autre caractéristique de l'invention, l'organe de détection est verrouillé en position active par un loquet venant s'engager sur l'organe de détection.

Selon encore une autre caractéristique de l'invention, l'organe de détection peut être déverrouillé par l'appui sur un bouton.

Selon encore une autre caractéristique de l'invention, l'arbre d'entraînement est solidaire en translation d'une bague montée coulissante sur un manchon porté par un corps supportant le mécanisme de transmission, l'arbre d'entraînement étant monté rotatif sur la bague, cette dernière comportant des doigts s'insérant dans des rainures du manchon et prenant appui sur les rampes d'une came rotative munie de dents coopérant avec un secteur denté porté par l'extrémité de l'organe de détection.

Selon une autre caractéristique de l'invention, le mécanisme de transmission comporte un ensemble de roues et pignons formant un réducteur de vitesse.

L'invention concerne également un appareil électroménager de préparation culinaire comprenant un boîtier moteur et un accessoire de préparation culinaire tel que précédemment décrit.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un boîtier moteur et d'un accessoire de préparation culinaire selon un mode particulier de réalisation de l'invention,
- la figure 2 est une vue en perspective éclatée de l'accessoire de préparation culinaire illustré à la figure 1,
- la figure 3 est une vue en perspective éclatée du module de transmission équipant l'accessoire de préparation culinaire illustré aux figures 1 et 2,
- la figure 4 est une vue de dessus du module de transmission de la figure 3 représenté sans la coquille supérieure,
- la figure 5 est une vue en coupe du module de transmission complet selon la ligne V-V de la figure 4,
- la figure 6 est une vue en perspective du module de transmission de la figure 4 lorsque le bras de détection est en position de repos,
- la figure 7 est une vue en perspective, en coupe partielle, du module de transmission illustré aux figures précédentes lorsqu'il est accouplé au boîtier moteur et que le bras de détection est en position de repos,
- la figure 8 est une vue similaire à la figure 6 lorsque le bras de détection est en position active,
- la figure 9 est une vue en perspective, en coupe partielle, de l'accessoire de la figure 1 accouplé au boîtier moteur lorsque le couvercle est fermé sur le récipient.

Seuls les éléments nécessaires à la compréhension de l'invention ont été représentés. Pour faciliter la lecture des dessins les mêmes éléments portent les mêmes références d'une figure à l'autre.

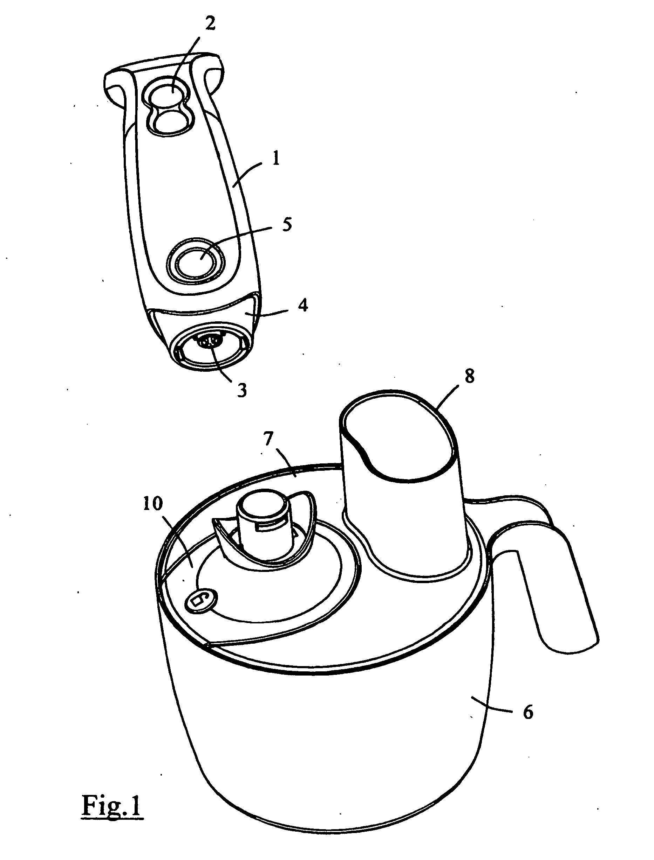

La figure 1 illustre un boîtier moteur 1 ainsi qu'un accessoire de préparation culinaire pouvant être utilisé avec le boîtier moteur 1.

Le boîtier moteur 1 renferme, de manière connue en soi, un moteur commandé par un bouton de commande 2, le moteur entraînant un entraîneur 3 disposé à l'extrémité inférieure du boîtier moteur 1. L'entraîneur 3 est entouré d'une tête d'accouplement 4 qui permet notamment l'accouplement du boîtier 1 avec un accessoire de type pied mixeur. Un bouton de déverrouillage 5 est prévu sur le corps du boîtier 1 pour permettre le désaccouplement du boîtier moteur 1 de l'accessoire.

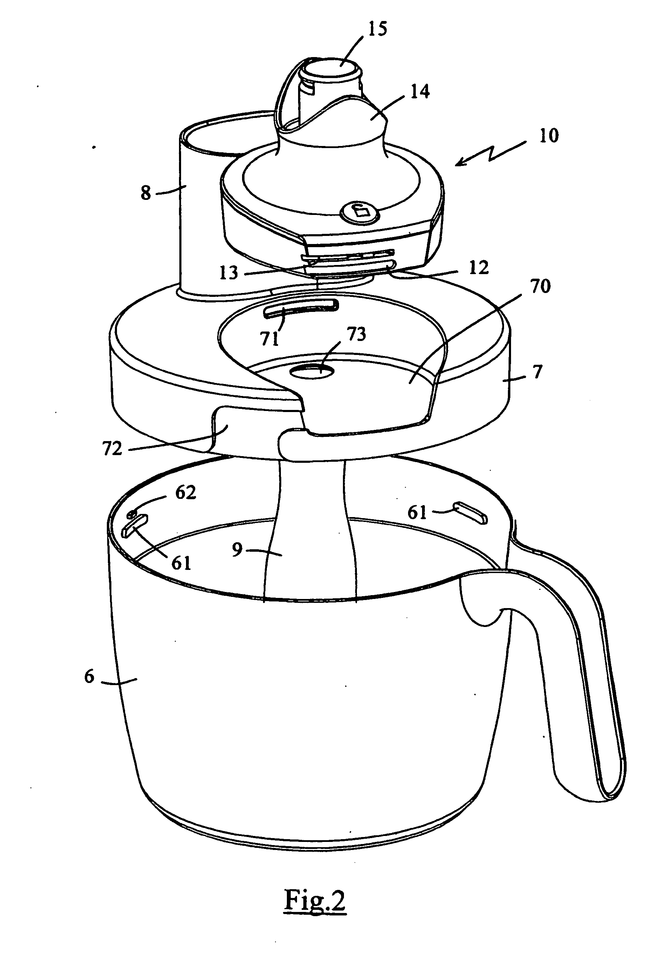

Comme on peut mieux le voir sur la figure 2, l'accessoire de préparation culinaire comprend un récipient de travail 6 fermé par un couvercle 7 muni d'une goulotte 8 pour l'introduction des aliments, le récipient 6 renfermant un outil rotatif 9.

De manière préférentielle, la face supérieure du couvercle 7 supporte un module de transmission 10 qui est monté amovible dans une cavité 70 du couvercle 7 de sorte que le couvercle 7 peut être nettoyé, par exemple au lave vaisselle, indépendamment du module de transmission 10.

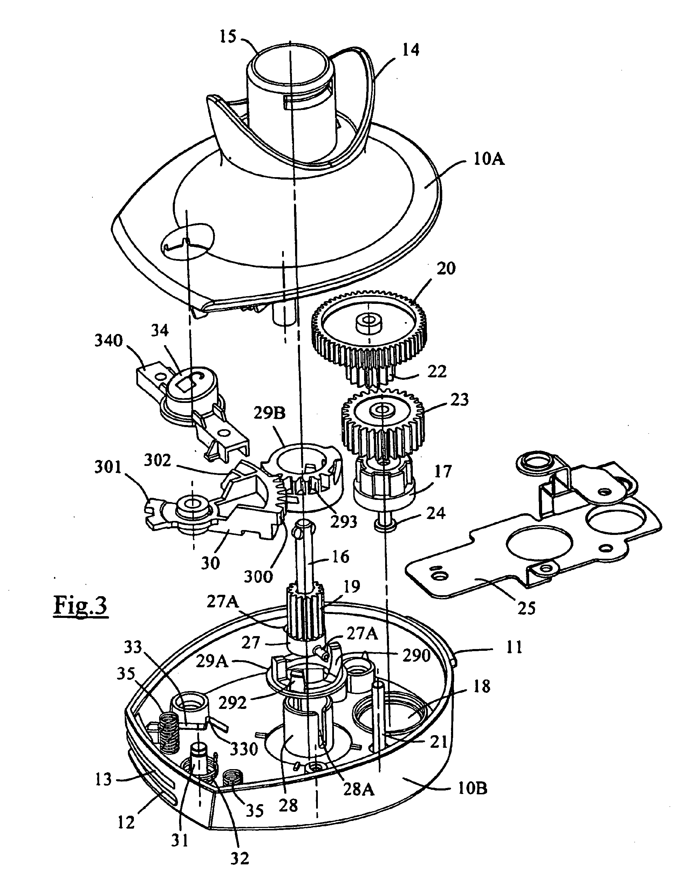

La cavité 70 de réception du module de transmission 10 présente une forme sensiblement oblongue qui s'étend depuis la zone centrale jusqu'à la périphérie du couvercle 7, la cavité 70 comportant une rainure 71 adaptée dans laquelle s'engage, par un mouvement de basculement du module 10, un bossage 11 présent sur l'arrière du module de transmission 10, visible sur la figure 3, le bossage 11 assurant l'immobilisation verticale de la partie arrière du module de transmission 10 dans la cavité 70.

Le module de transmission 10 comporte une face avant, venant compléter la périphérie du couvercle 7, comprenant une rainure 12 venant dans le prolongement d'une échancrure 72 formée sur la périphérie du couvercle 7 et dans laquelle vient s'engager un tenon 61 porté par la paroi interne du récipient 6 pour réaliser une liaison de type baïonnette avec le récipient 6. La face avant du module 10 comporte également, en parallèle à la rainure 12, une gorge 13 dans laquelle vient s'engager un ergot 62 porté par la paroi interne du récipient 6 lors de la rotation accompagnant la fermeture du couvercle 7, cet ergot 62 venant coopérer avec un dispositif de sécurité disposé à l'intérieur du module de transmission 10.

Le module de transmission 10 présente sur sa face supérieure une jupe de réception 14 présentant une forme complémentaire de la tête d'accouplement 4 du boîtier moteur 1, la jupe de réception 14 entourant un manchon d'accouplement 15 s'insérant dans la tête 4 du boîtier lorsque ce dernier est amené sur le module de transmission 10.

Comme on peut mieux le voir sur la figure 3, le module de transmission 10 est formé par une coquille supérieure 10A assemblée sur une coquille inférieure 10B et renferme un mécanisme de transmission permettant de transmettre, préférentiellement avec une réduction de la vitesse d'entraînement, le mouvement de rotation d'un arbre d'entraînement 16 débouchant dans le manchon d'accouplement 15 de la coquille supérieure 10A à un entraîneur 17 débouchant dans une ouverture 18 du fond de la coquille inférieure 10B.

L'ouverture 18 est disposée de telle sorte qu'elle vient dans l'alignement d'une ouverture 73, visible sur la figure 2, du fond de la cavité 70 lorsque le module de transmission 10 est inséré dans la cavité 70. Cette ouverture 18 est préférentiellement disposée au niveau du centre du couvercle 7 pour que l'outil rotatif 9 se trouve placé verticalement au centre du récipient 6 lorsque son extrémité supérieure s'engage dans l'entraîneur 17 et que son extrémité inférieure est guidée par un pion disposé au fond du récipient 6.

Pour des questions de sécurité, la forme de l'entraîneur 17 du module de transmission est différente de la forme de l'entraîneur 3 du boîtier moteur 1 de sorte que seul l'entraîneur 17 du module de transmission peut être accouplé à l'extrémité de l'outil rotatif 9, empêchant ainsi un entraînement direct de l'outil rotatif 9 par l'entraîneur 3 du boîtier moteur 1.

Conformément aux figures 3 à 5, le mécanisme de transmission 10 est constitué par un pignon 19 solidaire en rotation de l'arbre d'entraînement 16, le pignon 19 s'engageant dans les dents d'une roue dentée 20 guidée par un axe 21, la roue dentée 20 étant solidaire d'un deuxième pignon 22 dont les dents s'engagent sur une deuxième roue dentée 23 rendue solidaire en rotation de l'entraîneur 17 par des cannelures, l'ensemble étant guidé en rotation par un axe 24.

De manière préférentielle, les axes 21, 24 de guidage des roues 20, 23 et pignons 19, 22 sont maintenus en position par une platine 25 métallique qui est rapportée à l'intérieur de la coquille inférieure 10B, l'ensemble des pignons 19, 22 et roues 20, 23 étant montés sur la platine 25 avant que cette dernière ne soit disposée dans la coquille inférieure 10B.

Plus particulièrement selon l'invention, l'arbre d'entraînement 16 est mobile en translation sur une course permettant l'engagement ou le désengagement de l'extrémité de l'arbre d'entraînement 16 au travers de l'entraîneur 3 du boîtier moteur 1 lorsque la tête d'accouplement 4 de ce dernier est engagée dans la jupe de réception 14 du module de transmission 10.

A cet effet, l'arbre d'entraînement 16 est guidé dans sa partie supérieure par un palier 26 porté par la platine 25 et est solidaire en translation d'une bague 27 disposée à proximité de l'extrémité inférieure de l'arbre d'entraînement 16, la bague 27 comportant des doigts 27A venant coulisser à l'intérieur de rainures 28A formées dans un manchon de guidage 28 cylindrique porté par la coquille inférieure 10B. De manière préférentielle, la bague 27 intègre un palier 27B réalisé dans un matériau à faible coefficient de frottement favorisant la libre rotation de l'arbre d'entraînement 16.

Le manchon de guidage 28 reçoit une came 29 rotative de forme sensiblement annulaire comportant une partie inférieure 29A, disposée sous la bague de guidage 27, présentant des rampes 290 sur lesquelles prennent appui les doigts 27A de la bague 27, et une partie supérieure 29B comprenant des parties échancrée venant au-dessus des rampes 290 et formant avec ces dernières des rainures 291 dans lesquelles les doigts de guidage 27A peuvent coulisser lors de la rotation de la came 29. La partie supérieure 29B de la came 29 est rendue solidaire de la partie inférieure 29A par des languettes élastiques 292 et comporte une partie dentée 293 qui s'engraine sur un secteur denté 300 porté par l'extrémité d'un bras de détection 30 monté rotatif sur un axe 31 disposé à proximité de la face avant du module 10.

De manière avantageuse, les rampes 290 de la came rotative 29 sont adaptées pour assurer le déplacement axial de l'arbre d'entraînement 16 sur une course de l'ordre de 1 cm lors de la rotation de la came 29 sur environ un quart de tour.

Le bras de détection 30 comporte une extrémité s'insérant dans la gorge 13 de la face avant du module qui présente la forme d'une fourchette à deux dents 301 séparées par un espace adapté pour recevoir l'ergot 62 de la paroi du récipient 6, le bras de détection 30 étant soumis à l'action d'un ressort de rappel 32 ramenant le bras 30 dans le sens horaire.

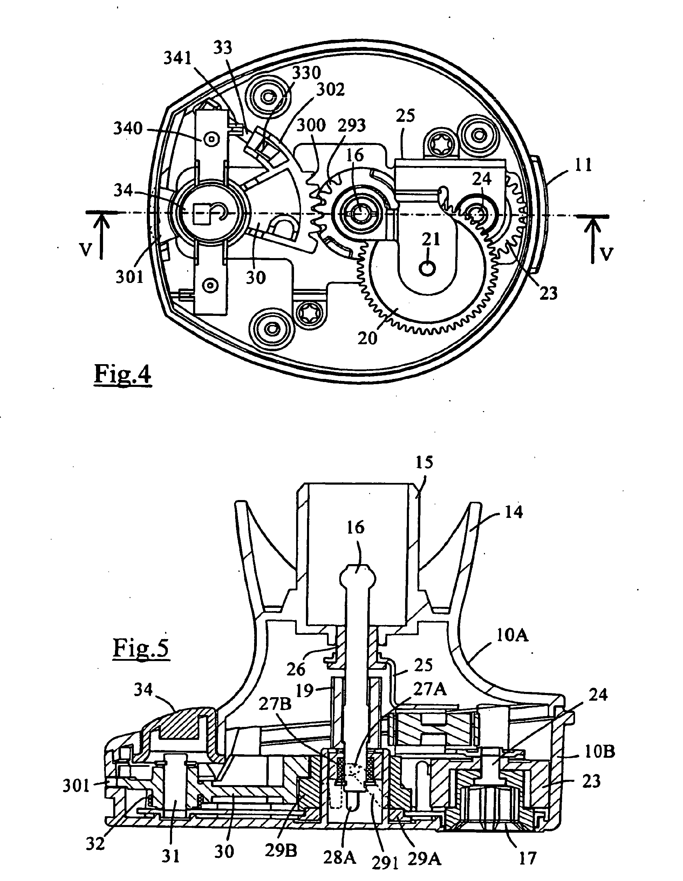

Comme on peut mieux le voir sur la figure 4, le bras de détection 30 comporte une attache latérale 302 dans laquelle peut s'insérer la tête 330 d'un loquet de verrouillage 33 constitué par une lame ressort dont une extrémité est fixée à la coquille inférieure 10B. Ce loquet de verrouillage 33 permet d'immobiliser le bras de détection 30 dans la position active, illustrée aux figures 4, 5 et 7, dans laquelle les deux dents de la fourchette 301 se trouvent disposées sensiblement symétriquement de part et d'autre de l'axe longitudinal du module de transmission 10.

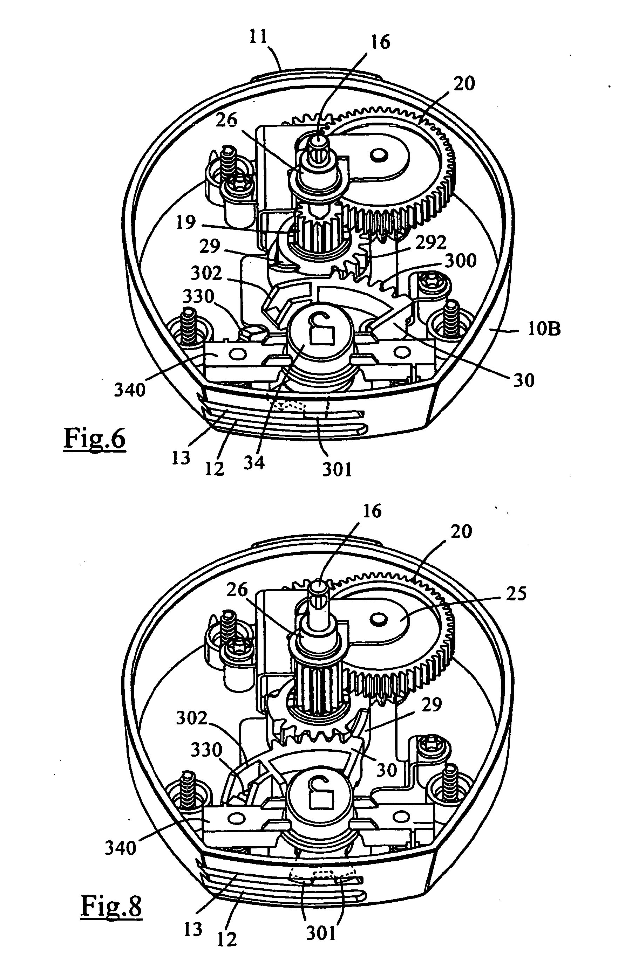

L'axe du bras de détection 30 est surmonté d'un bouton de déverrouillage 34 solidaire d'une traverse 340 montée verticalement sur deux ressorts 35, la traverse 340 présentant une butée 341 venant au-dessus du loquet de verrouillage 33. Par cet agencement, l'enfoncement du bouton de déverrouillage 34 provoque le déplacement vers le bas du loquet de verrouillage 33 et le désengagement de la tête 330 de l'attache latérale 302, le bras de détection 30 revenant alors dans une position de repos, illustrée à la figure 6, sous l'effet du ressort de rappel 32.

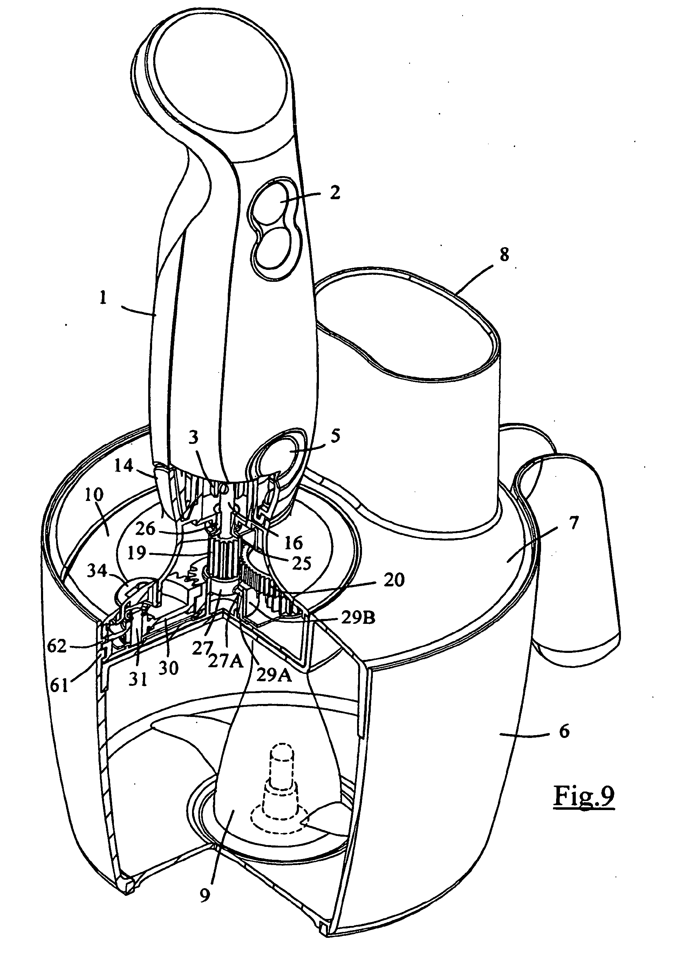

Le fonctionnement du dispositif de sécurité du module de transmission 10 ainsi réalisé va maintenant être décrit en relation avec les figures 6 à 10.

La figure 6 illustre le module de transmission 10 lorsque le bras de détection du dispositif de sécurité est en position de repos, c'est-à-dire lorsque le couvercle 7 et son module de transmission 10 ne sont pas montés sur le récipient 6.

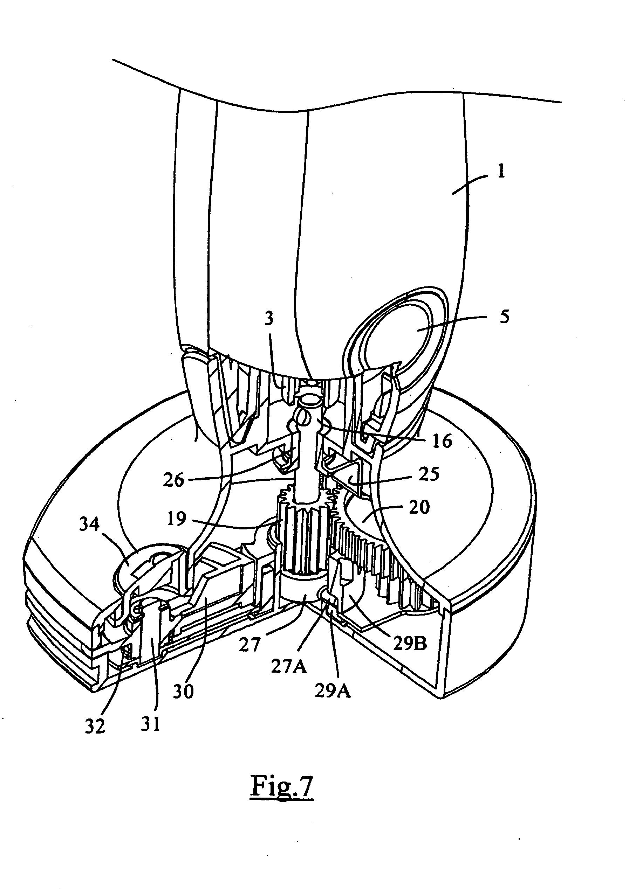

Dans cette position, le bras de détection 30 est maintenu par le ressort de rappel 32 dans une position dans laquelle les doigts 27A de la bague sont en butée à une extrémité des rainures 291 de la came 29 rotative, les doigts 27A se trouvant alors au pied des rampes 290 de sorte que la bague 27 est au fond du manchon de guidage 28 et l'arbre d'entraînement 16 occupe une position de sécurité où il se trouve en retrait vers l'intérieur du module de transmission 10 ainsi que cela est illustré à la figure 7.

Conformément à cette figure, l'utilisateur peut alors accoupler le boîtier moteur 1 au module de transmission 10 en amenant la tête d'accouplement 4 au travers de la jupe de réception 14 de forme complémentaire. Cependant, l'arbre d'entraînement 16 se trouvant en retrait au fond du manchon d'accouplement 15, il n'est pas engagé dans l'entraîneur 3 du boîtier moteur 1 de sorte que la mise en marche du moteur par l'appui sur le bouton de commande 2 ne provoque pas la rotation de l'arbre d'entraînement 16. Il n'y a alors aucun risque à ce que l'utilisateur engage l'extrémité de l'outil rotatif 9 dans l'entraîneur 17 du module de transmission 10 puisque l'entraîneur 3 du boîtier moteur 1 n'est pas en prise avec l'arbre d'entraînement 16.

A l'inverse, lorsque le couvercle 7 muni du module de transmission 10 est monté sur le récipient 6 puis est tourné pour son verrouillage, les tenons 61 sont engagés dans les rainures 12 du couvercle 7 à la manière traditionnelle d'une liaison baïonnette et l'ergot 62 est inséré au travers de la gorge 13 de la face avant du module de transmission 10 puis vient s'engager entre les deux dents de la fourchette 301 du bras de détection 30 en provoquant la rotation de ce dernier jusqu'à une position active, illustrée à la figure 8, dans laquelle la tête 330 du loquet de verrouillage 33 se trouve engagée dans l'attache 302. Cette rotation du bras de détection 30 est accompagnée d'un déplacement vertical de l'arbre d'entraînement 16 sur une course de l'ordre de 1 cm du fait de la rotation de la came 29 rotative et du cheminement des doigts 27A de la bague de guidage 27 jusqu'à l'extrémité supérieure des rampes 290 de la came 29.

L'arbre d'entraînement 16 se trouve alors dans une position de fonctionnement dans laquelle il fait d'avantage saillie au sein du manchon d'accouplement 15 de sorte que lorsque la tête d'accouplement 4 du boîtier moteur 1 est insérée dans la jupe de réception 14 du module de transmission, l'arbre d'entraînement 16 se trouve engagé dans l'entraîneur 3, tel que cela est illustré à la figure 8, et la rotation du moteur 1 assure la rotation de l'outil rotatif 9 dans le récipient 6.

Dans cette position verrouillée du bras de détection 30 en position active, les deux dents de la fourchette 301 d'extrémité du bras de détection 30 sont disposées de part et d'autre de l'ergot 62 du récipient, empêchant ainsi la rotation du couvercle 7 et donc son ouverture. Si l'utilisateur souhaite ouvrir le couvercle 7, il est obligé d'appuyer sur le bouton de déverrouillage 34 de manière à libérer le bras de détection 30 tout en tournant le couvercle 7. La rotation du couvercle 7 ainsi que l'action du ressort 32 de rappel provoquent alors la rotation du bras de détection 30 jusqu'à sa position de repos précédemment décrite. Cette rotation du bras de détection 30 vers la position de repos est accompagnée d'une translation de l'arbre d'entraînement 16 vers sa position de sécurité dans laquelle l'entraîneur 3 du boîtier moteur 1 n'est plus en prise avec l'arbre d'entraînement 16. Il n'y a donc plus aucun risque d'entraînement de l'outil rotatif 9 lorsque le couvercle 7 muni du module de transmission 10 est désengagé du récipient 6.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention telle que revendiquée.

Ainsi, dans une variante de réalisation non représentée de l'invention, le module de transmission pourra ne pas être amovible du couvercle mais être intégré dans le couvercle.

Ainsi, dans une variante de réalisation, l'arbre d'entraînement pourra être fixe et ce sera l'entraîneur destiné à être accouplé à l'outil rotatif qui sera déplacé par l'organe de détection entre une position de sécurité empêchant l'accouplement avec l'outil rotatif et une position de fonctionnement autorisant un tel accouplement.

Ainsi, dans une autre variante de réalisation de l'invention, l'organe de détection pourra déplacer une pièce intermédiaire du mécanisme de transmission, telles que les roues ou pignons, entre une position de sécurité dans laquelle la transmission de mouvement entre l'arbre d'entraînement et l'entraîneur destiné à être accouplé à l'outil rotatif est interrompue et une position de fonctionnement assurant une telle transmission de mouvement.

## Revendications

1. Accessoire de préparation culinaire prévu pour être utilisé avec un boîtier moteur (1), ledit accessoire comportant un récipient de travail (6) fermé par un couvercle (7) supportant une zone de réception (14) du boîtier moteur (1) et un mécanisme de transmission comprenant d'une part un arbre d'entraînement (16) destiné à s'accoupler avec un entraîneur (3) du boîtier moteur (1) et d'autre part un entraîneur (17) destiné à s'accoupler avec un outil rotatif (9) disposé dans le récipient de travail (6), le couvercle (7) supportant également un organe de détection (30) mobile entre une position active, occupée lorsque le couvercle (7) avec son mécanisme de transmission est en place sur le récipient de travail (6), et une position de repos, occupée en l'absence du récipient de travail (6), **caractérisé en ce que** le déplacement de l'organe de détection (30) entre la position active et la position de repos provoque respectivement le déplacement d'une pièce (16) mobile du mécanisme de transmission entre une position de fonctionnement et une position de sécurité, dans lesquelles, respectivement, le mécanisme de transmission assure ou non l'entraînement de l'outil rotatif (9) lorsque le boîtier moteur (1) est engagé dans la zone de réception (14).

2. Accessoire de préparation culinaire selon la revendication 1, **caractérisé en ce que** ladite pièce mobile du mécanisme de transmission est constituée par l'arbre d'entraînement (16), ce dernier étant mobile entre une position de sécurité dans laquelle l'arbre d'entraînement (16) est escamoté, de sorte qu'il ne peut s'accoupler à l'entraîneur (3) lorsque le boîtier moteur (1) est engagé dans la zone de réception (14), et une position de fonctionnement dans laquelle l'arbre d'entraînement (16) peut être accouplé à l'entraîneur (3).

3. Accessoire de préparation culinaire selon l'une quelconque des revendications 1 à 2, **caractérisé en ce que** la zone de réception (14), ledit mécanisme de transmission et l'organe de détection (30) sont portés par un module de transmission (10) amovible du couvercle (7).

4. Accessoire de préparation culinaire selon l'une quelconque des revendications 1 à 3, **caractérisé en ce que** ledit organe de détection (30) assure également le verrouillage du couvercle (7) sur le récipient, le déverrouillage du couvercle (7) provoquant le retour en position de repos de l'organe de détection (30).

5. Accessoire de préparation culinaire selon des revendications 1 à 4, **caractérisé en ce que** l'arbre d'entraînement (16) est mobile en translation entre la position de sécurité et la position de fonctionnement.

6. Accessoire de préparation culinaire selon l'une quelconque des revendications 1 à 5, **caractérisé en ce que** ledit organe de détection (30) est mobile en rotation.

7. Accessoire de préparation culinaire selon la revendication 6, **caractérisé en ce que** l'organe de détection (30) comporte une extrémité présentant la forme d'une fourchette (301) coopérant avec un ergot (62) présent sur le récipient (7).

8. Accessoire de préparation culinaire selon l'une quelconque des revendications 6 ou 7, **caractérisé en ce que** ledit organe de détection (30) est ramené en position de repos par un ressort de rappel (32).

9. Accessoire de préparation culinaire selon l'une quelconque des revendications 6 à 8, **caractérisé en ce que** ledit organe de détection (30) est verrouillé en position active par un loquet (33) venant s'engager sur l'organe de détection (30).

10. Accessoire de préparation culinaire selon la revendication 9, **caractérisé en ce que** ledit organe de détection (30) peut être déverrouillé par l'appui sur un bouton (34).

11. Accessoire de préparation culinaire selon l'une quelconque des revendications 5 à 10, **caractérisé en ce que** l'arbre d'entraînement (16) est solidaire en translation d'une bague (27) montée coulissante sur un manchon (28) porté par un corps supportant le mécanisme de transmission, l'arbre d'entraînement (16) étant monté rotatif sur ladite bague (27), cette dernière comportant des doigts (27A) s'insérant dans des rainures (28A) du manchon et prenant appui sur les rampes (290) d'une came rotative (29) munie de dents (293) coopérant avec un secteur denté (300) porté par l'extrémité de l'organe de détection (30).

12. Accessoire de préparation culinaire selon l'une quelconque des revendications 1 à 11, **caractérisé en ce que** ledit mécanisme de transmission comporte un ensemble de roues (20, 23) et pignons (19,22) formant un réducteur de vitesse.

13. Appareil électroménager de préparation culinaire comprenant un boîtier moteur (1) et un accessoire de préparation culinaire, ledit accessoire de préparation culinaire comportant un récipient de travail (6) fermé par un couvercle (7) supportant un mécanisme de transmission comprenant d'une part un arbre d'entraînement (16) destiné à s'accoupler avec un entraîneur (3) du boîtier moteur et d'autre part un organe d'entraînement (17) destiné à s'accoupler avec un outil rotatif (9) disposé dans le récipient de travail (6), **caractérisé en ce que** ledit accessoire de préparation culinaire est conforme à l'une des revendications 1 à 12.

## Claims

1. A food preparation accessory designed to be used with a motor unit (1), said accessory comprising a work receptacle (6) closed by a lid (7) supporting a reception zone (14) for receiving the motor unit (1), and a transmission mechanism comprising firstly a drive shaft (16) designed to be coupled to a driver (3) of the motor unit (1) and secondly a driver (17) designed to be coupled to a rotary tool (9) placed in the work receptacle (6), the lid (7) also supporting a detector member (30) that is mounted to be movable between an active position, taken up when the lid (7) together with its transmission mechanism is in place on the work receptacle (6), and a rest position, taken up in the absence of the work receptacle (6), said food preparation accessory being **characterized in that** the detector member (30) moving between the active position and the rest position causes a moving piece (16) of the transmission mechanism to move respectively between an operating position and a safety position, in which positions, respectively, the transmission mechanism drives or does not drive the rotary tool (9) when the motor unit (1) is engaged in the reception zone (14).

2. A food preparation accessory according to claim 1, **characterized in that** said moving piece of the transmission mechanism is constituted by the drive shaft (16), said drive shaft being mounted to be movable between a safety position in which the drive shaft (16) is retracted, so that it cannot be coupled to the driver (3) when the motor unit (1) is engaged in the reception zone (14), and an operating position in which the drive shaft (16) can be coupled to the driver (3).

3. A food preparation accessory according to claim 1 or claim 2, **characterized in that** the reception zone (14), said transmission mechanism, and the detector member (30) are carried by a transmission module (10) that is removable from the lid (7).

4. A food preparation accessory according to any one of claims 1 to 3, **characterized in that** said detector member (30) also locks the lid (7) onto the receptacle, the lid (7) being unlocked causes the detector member (30) to return to the rest position.

5. A food preparation accessory according to any one of claims 1 to 4, **characterized in that** the drive shaft (16) is mounted to be movable in translation between the safety position and the operating position.

6. A food preparation accessory according to any one of claims 1 to 5, **characterized in that** said detector member (30) is mounted to be movable in rotation.

7. A food preparation accessory according to claim 6, **characterized in that** the detector member (30) has an end in the shape of a fork (301) co-operating with a lug (62) that is present on the receptacle (7).

8. A food preparation accessory according to claim 6 or claim 7, **characterized in that** said detector member (30) is urged back into the rest position by a return spring (32).

9. A food preparation accessory according to any one of claims 6 to 8, **characterized in that** said detector member (30) is locked in the active position by a latch (33) coming to engage on the detector member (30).

10. A food preparation accessory according to claim 9, **characterized in that** said detector member (30) can be unlocked by pressing on a button (34).

11. A food preparation accessory according to any one of claims 5 to 10, **characterized in that** the drive shaft (16) is constrained to move in translation with a ring (27) that is mounted to slide on a sleeve (28) that is carried by a body supporting the transmission mechanism, the drive shaft (16) being mounted to rotate on said ring (27), said ring being provided with fingers (27A) that fit into grooves (28A) of the sleeve and that bear against the ramps (290) of a rotary cam (29) provided with teeth (293) that co-operate with a toothed sector (300) carried by the end of the detector member (30).

12. A food preparation accessory according to any one of claims 1 to 11, **characterized in that** said transmission mechanism comprises a set of gearwheels (20, 23) and of cogs (19, 22) forming a speed-reducing gearing.

13. A household electrical appliance for preparing food, which appliance comprises a motor unit (1) and a food preparation accessory, said food preparation accessory comprising a work receptacle (6) closed by a lid (7) supporting a transmission mechanism comprising firstly a drive shaft (16) designed to be coupled to a driver (3) of the motor unit (1) and secondly a driver (17) designed to be coupled to a rotary tool (9) placed in the work receptacle (6), said household electrical appliance for preparing food being **characterized in that** said food preparation accessory is a food preparation accessory in accordance with any one of claims 1 to 12.

## Patentansprüche

1. Zubehörteil zur Nahrungsmittelzubereitung, das dazu vorgesehen ist, mit einem Motorgehäuse (1) verwendet zu werden, wobei das Zubehörteil einen Arbeitsbehälter (6) aufweist, der durch einen Deckel (7) verschlossenen ist, welcher einen Bereich (14) zur Aufnahme des Motorgehäuses (1) und einen Übertragungsmechanismus trägt, der zum einen eine Antriebswelle (16), die an ein Antriebselement (3) des Motorgehäuses (1) gekoppelt werden soll, und zum anderen ein Antriebselement (17) aufweist, das an ein im Arbeitsbehälter (6) angeordnetes drehbares Werkzeug (9) gekoppelt werden soll, wobei der Deckel (7) auch ein Erfassungsorgan (30) trägt, das zwischen einer aktiven Stellung, die es einnimmt, wenn der Deckel (7) mit seinem Übertragungsmechanismus auf dem Arbeitsbehälter (6) aufgesetzt ist, und einer Ruhestellung beweglich ist, die es einnimmt, wenn der Arbeitsbehälter (6) nicht vorhanden ist, **dadurch gekennzeichnet, dass** die Verlagerung des Erfassungsorgans (30) zwischen der aktiven Stellung und der Ruhestellung jeweils die Verlagerung eines beweglichen Teils (16) des Übertragungsmechanismus zwischen einer Betriebsstellung und einer Sicherheitsstellung bewirkt, in welchen der Übertragungsmechanismus das Antreiben des drehbaren Werkzeugs (9) gewährleistet bzw. nicht gewährleistet, wenn das Motorgehäuse (1) in den Aufnahmebereich (14) eingesetzt ist.

2. Zubehörteil zur Nahrungsmittelzubereitung nach Anspruch 1, **dadurch gekennzeichnet, dass** das bewegliche Teil des Übertragungsmechanismus durch die Antriebswelle (16) gebildet ist, wobei diese zwischen einer Sicherheitsstellung, in der die Antriebswelle (16) eingezogen ist, so dass sie nicht an das Antriebselement (3) gekoppelt werden kann, wenn das Motorgehäuse (1) in den Aufnahmebereich (14) eingesetzt ist, und einer Betriebsstellung beweglich ist, in der die Antriebswelle (16) an das Antriebselement (3) gekoppelt werden kann.

3. Zubehörteil zur Nahrungsmittelzubereitung nach einem der Ansprüche 1 und 2, **dadurch gekennzeichnet, dass** der Aufnahmebereich (14), der Übertragungsmechanismus und das Erfassungsorgan (30) an einem Übertragungsmodul (10) vorgesehen sind, das vom Deckel (7) abgenommen werden kann.

4. Zubehörteil zur Nahrungsmittelzubereitung nach einem der Ansprüche 1 bis 3, **dadurch gekennzeichnet, dass** das Erfassungsorgan (30) auch die Verriegelung des Deckels (7) am Behälter gewährleistet, wobei die Entriegelung des Deckels (7) dazu führt, dass das Erfassungsorgan (30) wieder die Ruhestellung einnimmt.

5. Zubehörteil zur Nahrungsmittelzubereitung nach einem der Ansprüche 1 bis 4, **dadurch gekennzeichnet, dass** die Antriebswelle (16) translatorisch zwischen der Sicherheitsstellung und der Betriebsstellung beweglich ist.

6. Zubehörteil zur Nahrungsmittelzubereitung nach einem der Ansprüche 1 bis 5, **dadurch gekennzeichnet, dass** das Erfassungsorgan (30) drehbar ist.

7. Zubehörteil zur Nahrungsmittelzubereitung nach Anspruch 6, **dadurch gekennzeichnet, dass** das Erfassungsorgan (30) ein Ende aufweist, das die Form einer Gabel (301) hat, die mit einer am Behälter (7) vorhandenen Nase (62) zusammenwirkt.

8. Zubehörteil zur Nahrungsmittelzubereitung nach Anspruch 6 oder 7, **dadurch gekennzeichnet, dass** das Erfassungsorgan (30) durch eine Rückstellfeder (32) in die Ruhestellung zurückgestellt wird.

9. Zubehörteil zur Nahrungsmittelzubereitung nach einem der Ansprüche 6 bis 8, **dadurch gekennzeichnet, dass** das Erfassungsorgan (30) durch einen Riegel (33), der am Erfassungsorgan (30) angreift, in der aktiven Stellung verriegelt ist.

10. Zubehörteil zur Nahrungsmittelzubereitung nach Anspruch 9, **dadurch gekennzeichnet, dass** das Erfassungsorgan (30) durch Drücken auf einen Knopf (34) entriegelt werden kann.

11. Zubehörteil zur Nahrungsmittelzubereitung nach einem der Ansprüche 5 bis 10, **dadurch gekennzeichnet, dass** die Antriebswelle (16) translatorisch fest mit einem Ring (27) verbunden ist, der gleitend an einer Hülse (28) angebracht ist, welche an einem Körper vorgesehen ist, der den Übertragungsmechanismus trägt, wobei die Antriebswelle (16) drehbar am Ring (27) angebracht ist, der Finger (27A) aufweist, die in Rillen (28A) der Hülse eingreifen und sich an den Rampen (290) eines Drehnockens (29) abstützen, der mit Zähnen (293) versehen ist, die mit einem gezahnten Bereich (300) zusammenwirken, mit dem das Ende des Erfassungsorgans (30) versehen ist.

12. Zubehörteil zur Nahrungsmittelzubereitung nach einem der Ansprüche 1 bis 11, **dadurch gekennzeichnet, dass** der Übertragungsmechanismus eine Baugruppe aus Rädern (20, 23) und Ritzeln (19, 22) aufweist, die ein Untersetzungsgetriebe bildet.

13. Elektrohaushaltsgerät zur Nahrungsmittelzubereitung mit einem Motorgehäuse (1) und einem Zubehörteil zur Nahrungsmittelzubereitung, wobei das Zubehörteil zur Nahrungsmittelzubereitung einen Arbeitsbehälter (6) aufweist, der durch einen Deckel (7) verschlossen ist, welcher einen Übertragungsmechanismus trägt, der zum einen eine Antriebswelle (16), die an ein Antriebselement (3) des Motorgehäuses gekoppelt werden soll, und zum anderen ein Antriebsorgan (17) aufweist, das an ein im Arbeitsbehälter (6) angeordnetes drehbares Werkzeug (9) gekoppelt werden soll, **dadurch gekennzeichnet, dass** das Zubehörteil zur Nahrungsmittelzubereitung ein Zubehörteil gemäß einem der Ansprüche 1 bis 12 ist.
